Europäisches Patentamt

European Patent Office

Office européen des brevets

(19)

(11) EP 0 410 718 B1

(12) EUROPEAN PATENT SPECIFICATION

(45) Date of publication and mention
of the grant of the patent:
**10.04.1996 Bulletin 1996/15**

(21) Application number: **90308142.0**

(22) Date of filing: **25.07.1990**

(51) Int Cl.6: **G06T 3/00**, H04N 5/262,
H04N 9/74

(54) **Video special effects generators**

Videotrickgeneratoren

Générateurs d'effets spéciaux vidéo

(84) Designated Contracting States:
**DE FR GB**

(30) Priority: **25.07.1989 JP 191875/89**

(43) Date of publication of application:
**30.01.1991 Bulletin 1991/05**

(73) Proprietor: **SONY CORPORATION**
**Tokyo 141 (JP)**

(72) Inventors:
• **Koyama, Shinsuke, c/o Patents Division**
**Shinagawa-ku, Tokyo 141 (JP)**

• **Watanabe, Osamu, c/o Patents Division**
**Shinagawa-ku, Tokyo 141 (JP)**

(74) Representative: **Cotter, Ivan John et al**
**D. YOUNG & CO.**
**21 New Fetter Lane**
**London EC4A 1DA (GB)**

(56) References cited:
**EP-A- 0 280 316          US-A- 4 533 952**

• **ELECTRONIC ENGINEERING. vol. 60, no. 737,**
**May 1988, LONDON GB pages 57 - 64; Biggs:**
**"Matrix notation simplifies image processing**
**algorithm design"**
• **TOSHIBA REVIEW. no. 161, September 1987,**
**TOKYO JP pages 3 - 6; Tanaka et al.:**
**"3-DIMENSIONAL DIGITAL PICTURE EFFECT**
**EQUIPMENT, THE DPE-X"**

**Description**

This invention relates to video special effects generators.

A video special effects generator has been proposed by which an original video image can be rotated, enlarged, reduced and moved on a picture screen of a television monitor in a three-dimensional (3D) fashion.

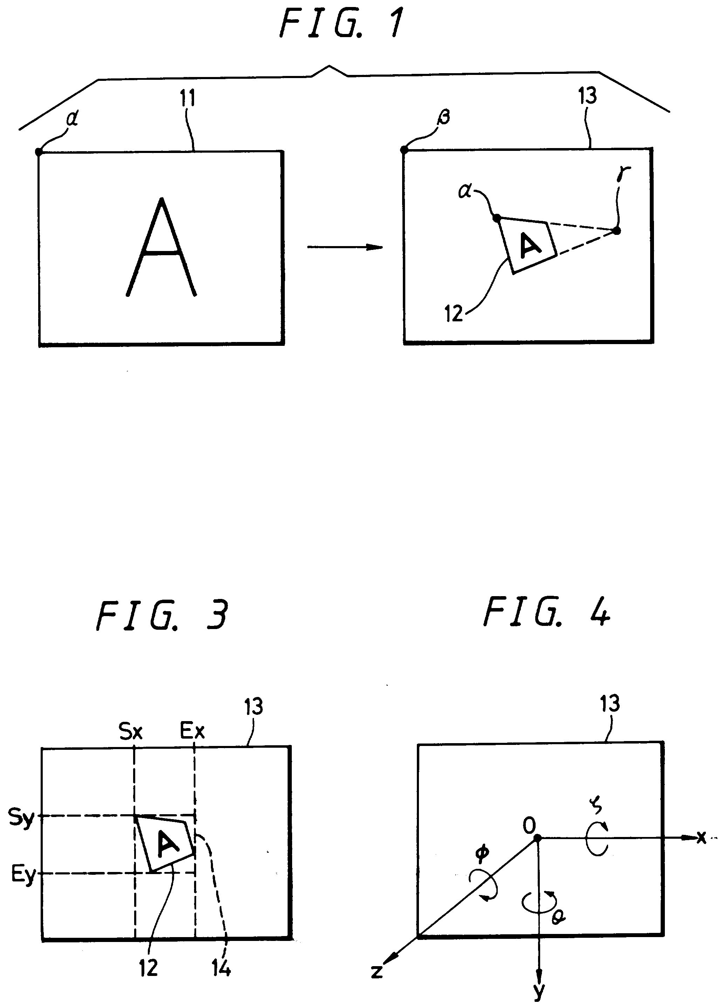

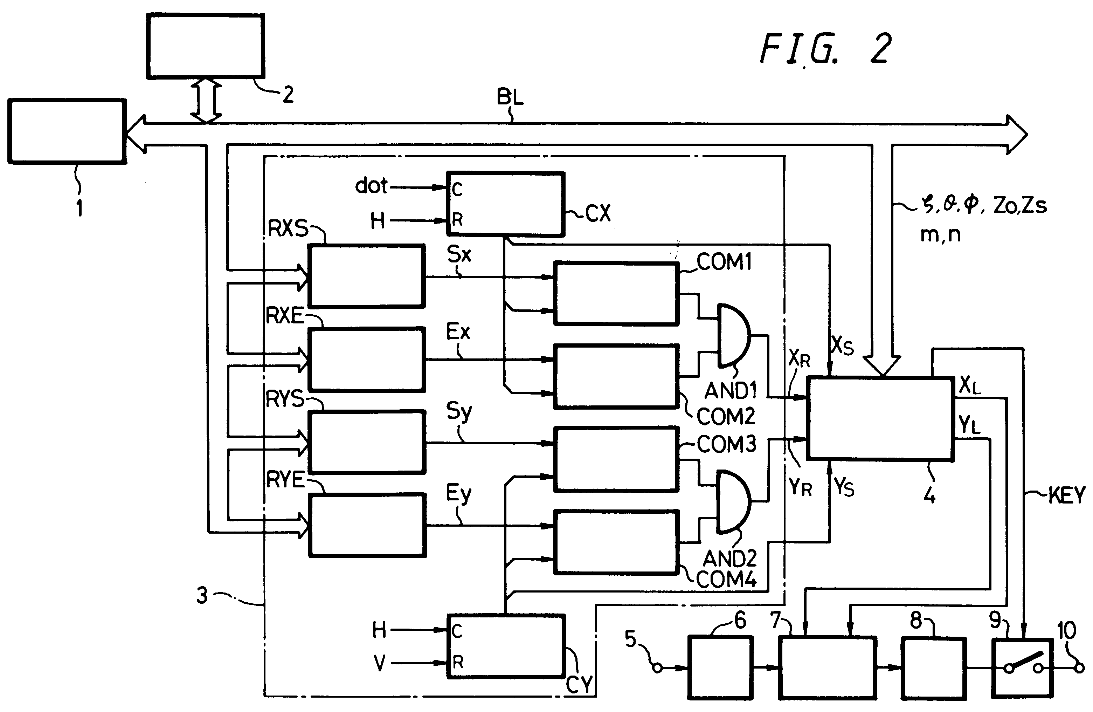

In this previously proposed video special effects generator, an original video image 11 shown on the left-hand side in Figure 1 is converted into digital data, and stored in a frame memory (not shown). In accordance with processing of the original video image, for example image rotation processing, the read address of the frame memory, that is, the address in the frame memory corresponding to the display address on the display screen is calculated in a real-time fashion, and the original video image data are read out from the frame memory in accordance with the read address resulting from the calculation. Thereafter, the video image data read out from the frame memory are converted into analogue form and displayed on the display screen, so that a rotation-processed video image 12 is displayed on a display screen 13 as shown at the right-hand side in Figure 1.

In this video special effects generator, in order to display the original video image 11 that is processed to be rotated in a three-dimensional manner, address calculations must be performed to determine the location of coordinates of the display screen 13 relative to the coordinates of the rotation-processed video image.

Thereafter, if the image to be displayed on the display screen 13 comprises a portion smaller than the original video image 11, that is, a reduced image, then the calculation of the coordinates of the location of the rotated image becomes very difficult. For example, assuming that a point $\alpha$ of the original video image 11 represents an origin, then a point $\beta$ on the display screen 13 has a negative value relative to the processed video image 12, and a point $\gamma$ on the display screen 13 has a much larger value. Thus, the coordinate system of the whole display screen 13 has a large dynamic range. Therefore, in order to calculate all of the coordinates of the display screen 13 in real time fashion, it is necessary to use a very complicated and expensive calculating circuit.

Electronic Engineering, Vol 60, no. 737, May 1988, London, pages 57-64, Biggs: "Matrix notation simplifies image processing algorithm design" discloses an apparatus for performing an image transformation in which the area within the target image for which source image pixel addresses are calculated is limited to a predetermined area.

EP-A-0 280 316 discloses a video image transformation system in which an image is split into a plurality of original minute rectangular segments for which separate calculations are performed.

According to the present invention there is provided a special effects generator for video signals, the generator comprising:

memory means for storing video signals;
a source of data indicating a calculating region for a special effects pattern; and
read address generating means coupled to said memory means and said source of data for generating a read address for addressing said video signals stored in said memory means associated with the special effects pattern; characterized by
address generation control means coupled to said source of data and to said generating means for limiting the generation of said read address in response to the data indicating the calculating region from said source of data, said address generation control means including a first counter receiving synch signals of said video signals and supplying an x display address to said address generation control means and said read address generating means and a second counter receiving synch signals of said video signals and supplying a y display address to said address generation control means and said read address generating means.

Thus an embodiment of special effects generator according to the present invention for processing video signals comprises a memory for storing incoming video signals, a read address generating circuit coupled to the memory for generating a read address to be supplied to the memory, and an address generation control circuit coupled to the read address generating circuit for limiting the operation of the read address generating circuit.

The invention will now be described by way of example with reference to the accompanying drawings, throughout which like parts are referred to by like references, and in which:

Figure 1 shows schematic representations of an original video image and a rotation-processed video image;
Figure 2 is a block diagram of an embodiment of special effects generator for video signals according to the present invention;
Figure 3 shows a schematic representation of a video image processed by the embodiment of Figure 2; and
Figure 4 is a schematic representation used in explaining the operation of the embodiment.

Referring to Figure 2, the embodiment comprises a central processing unit (CPU) 1 that is coupled to a read only memory (ROM) 2 and other circuit elements, which will be described later, via a bus line BL. The ROM 2 has stored therein data that indicate the calculating region for each special effects pattern on the display screen.

More specifically, as shown in Figure 3, the ROM 2 has stored therein a calculation region start address Sx in the lateral direction (x-axis direction) of the display screen 13 , an end address Ex in the same direction, a calculation region start address Sy in the longitudinal direction (y-axis direction) of the display screen 13, and an end address Ey in the same direction, thereby to specify a calculation region 14.

There is shown in Figure 2 a calculation region control circuit 3 that includes registers RXS, RXE, RYS and RYE. The register RXS stores the calculation region start address Sx, and the register RXE stores the end address Ex. The register RXS stores the start address Sy, and the register RYE stores the end address Ey.

As shown in Figure 2, counters CX and CY are provided. The counter CX is reset by a horizontal synchronizing signal (H), and counts clock pulses that correspond to pixels along a horizontal scan line continuously to generate an address Xs in the x-axis direction of the display screen 13, whereas the counter CY is reset by a vertical synchronizing signal (V), and counts horizontal synchronizing signals (H) continuously to generate an address Ys in the y-axis direction of the display screen 13. Therefore, the counter CY and CX continuously count changing x-axis and y-axis addresses.

Comparators COM1 and COM2 are provided, which are both coupled to the counter CX, and the comparator COM1 compares the x-axis direction address Xs from the counter CX with the calculation region start address Sx from the register RXS. The comparator COM1 derives an output signal "1" when the address Xs from the counter CX is larger than the start address Sx. The comparator COM2 compares the x-axis direction address Xs from the counter CX with the end address Ex from the register RXE. When the address Xs from the counter CX is smaller than the end address Ex, the comparator COM2 derives an output signal "1".

Comparators COM3 and COM4 are also provided, which are both connected to the counter CY. The comparator COM3 compares the y-axis direction address Ys from the counter CY with the start address Sy from the register RYS. When the address Ys from the counter CY is larger than the start address Sy, the comparator COM3 derives an output signal "1". The comparator COM4 compares the y-axis direction address Ys from the counter CY with the end address Ey from the register RYE. When the address Ys from the counter CY is smaller than the end address Ey, the comparator COM4 derives an output signal "1". AND circuits AND1 and AND2 are coupled to the comparators COM1 and COM2, and COM3 and COM4 respectively. The AND circuit AND1 is supplied at input terminals thereof with the signals from the comparators COM3 and COM4.

The output signals from the AND circuits AND1 and AND2 are supplied to a red address calculating circuit 4 as addresses $X_R$ and $Y_R$ to limit the region of the calculating operation for the read address calculating circuit 4, so that the read address calculating circuit in is inhibited from performing useless calculations. Moreover, the output signal of the counter CX is supplied to the read address calculating circuit in as an address Xs and the output signal of the counter CY is also supplied thereto as an address Ys.

The read address calculating circuit 4 calculates read addresses $X_L$ and $Y_L$ to read the data from a frame memory 7 in a fixed decimal point calculation fashion. The read address calculating circuit in also generates a key signal KEY that indicates a border line in the processed video image 12.

In Figure 2, there are also provided an analogue-to-digital (A/D) converting circuit 6 and a digital-to-analogue (D/A) converting circuit 8.

An analogue video signal of an original video image is applied to an input terminal 5 and is fed to the A/D converting circuit 6, in which it is converted to the form of a digital signal. The digital signal from the A/D converting circuit 6 is supplied to the frame memory 7. The frame memory 7 supplies the digital signal to the D/A converting circuit 8 in accordance with the address signals $X_L$ and $Y_L$ from the read address calculating circuit 4. The D/A converting circuit 8 is gated by a gate circuit 9 in response to the key signal (KEY) from the read address calculating circuit in, and an output signal from the gate circuit 9 is fed to an output terminal 10.

The process of rotating the original video image will be described with reference to Figure 4.

As shown in Figure 4, an x axis extends in the horizontal direction on the display screen 13, a y axis extends in the vertical direction on the display screen 13, a z axis extends in the direction perpendicular to the display screen 13, $\zeta$ is the rotational angle about the x axis, $\theta$ is the rotational angle about the y axis, and $\phi$ is the rotation angle about the z axis. Xs is the address in the x-axis direction on the display screen 13, Ys is the address in the y-axis direction on the display screen 13, and $X_L$ and $Y_L$ are the read addresses to the frame memory 7. Then, the read addresses $X_L$ and $Y_L$ are given by the following equations:

$$X_L = - \{(R_4 Xs - R_1 Ys) Z_0\} m/\{R_2 Xs + R_5 Ys + R_8 (Zs - Z_0)\} \tag{1}$$

$$Y_L = - \{(R_3 Xs - R_0 Ys) Z_0\} n/\{R_2 Ys + R_5 Ys + R_8 (Zs - Z_0)\} \tag{2}$$

where $Z_0$ and Zs are constants, and m and n are coefficients used to enlarge or reduce the original video image. Moreover, in equations (1) and (2), $R_0$ to $R_8$ are constants depending on the rotational angles $\zeta$, $\theta$ and $\phi$ , and the order of the rotations around the rotational axes. If the video image is rotated in the order of, for example, about the x axis, about the y axis and about the z axis, the constants $R_0$ to $R_8$ are expresses by the following equation:

$$
\begin{bmatrix} R_0, & R_3, & R_6 \\ R_1, & R_4, & R_7 \\ R_2, & R_5, & R_8 \end{bmatrix} =
$$

$$
\begin{bmatrix} \cos\theta\cos\emptyset\,, & \cos\theta\sin\emptyset\,, & -\sin\emptyset \\ \sin\zeta\sin\theta\cos\emptyset - \cos\zeta\sin\emptyset\,, & \sin\zeta\sin\theta\sin\emptyset + \cos\zeta\cos\emptyset, & \sin\zeta\cos\theta \\ \cos\zeta\sin\theta\cos\emptyset + \sin\zeta\sin\emptyset, & \cos\zeta\sin\theta\sin\emptyset\ \sin\zeta\cos\emptyset, & \cos\zeta\cos\theta \end{bmatrix}
$$

$$\dots\dots\dots(3)$$

Equations (1) to (3) are executed by the read address calculating circuit 4. For example, the read address calculating circuit 4 calculates the constants $R_0$ to $R_8$ by means of equation (3) in accordance with the angle information $\zeta$, $\theta$ and $\emptyset$ from the CPU 1. The constants $R_0$ to $R_8$ thus obtained, and constants $Z_0$, Zs, m and n are substituted into equations (1) and (2), and tnen the read addresses $X_L$ and $Y_L$ are calculated by the read address calculating circuit 4. Thereafter, the data at the addresses $X_L$ and $X_L$ are supplied to the frame memory 7. Then the data at tne addresses $X_L$ and $Y_L$ are supplied from the frame memory 7 to the D/A converting circuit 8, thereby converting into an analogue signal an image of a rotation-processed video signal. Thus, tne processed video image 12 snown in Figure 3 is displayed on the display screen 13.

As described above, since the calculation for processing the original video image in a special effects fashion is limited to the calculation region 14 within which the processed video image 12 is displayed on the display screen 13, the dynamic range of the coordinate system on which the calculation is made is small, and the number of figures necessary for the calculation is made is small. Therefore, the circuits for the calculation are simple in arrangement and are inexpensive, thus making it possible to realize an inexpensive special effects generator having multiple functions.

While data showing the calculation region 14 of each special effect pattern are stored in the ROM 2 as described above, data for each calculating region 14 need not be stored in advance but may be calculated by the CPU 1 for each special effects pattern that is desired.

The calculations for the calculating region 14 can be performed either by software or hardware. Furthermore, the calculation for obtaining the addresses $X_L$ and $Y_L$ may be performed in a fixed or a floating decimal point calculation fashion.

## Claims

1. A special effects generator for video signals, the generator comprising:

   memory means (7) for storing video signals;
   a source (2) of data indicating a calculating region (14) for a special effects pattern; and
   read address generating means (4) coupled to said memory means (7) and said source (2) of data for generating a read address for addressing said video signals stored in said memory means (7) associated with the special effects pattern; characterized by
   address generation control means coupled to said source (21) of data and to said generating means (4) for limiting the generation of said read address in response to the data indicating the calculating region (14) from said source (2) of data, said address generation control means including a first counter (CX) receiving synch signals of said video signals and supplying an x display address to said address generation control means and said read address generating means (4) and a second counter receiving synch signals of said video signals and supplying a y display address to said address generation control means and said read address generating means (4).

2. A special effects generator according to claim 1 wherein said address generation control means receives the data indicating the calculating region (14) for the special effects pattern from said source (2) of data, and includes x address limited means for producing an x address limiting signal fed to said read address generating means (14), and y address limiting means for producing a y address limiting signal fed to said read address generating means (4).

3. A special effects generator according to claim 2 wherein said x address limiting means includes a first register (RXS) for setting an x start address, a second register (RXE) for setting an x end address, a first comparator (COM1) being supplied with said x start address stored in said first register (RXS), a second comparator (COM2) being supplied with said x end address set in said second register (RXE), said first counter (CX) supplying said x display address to said first and second comparators (COM1, COM2), said first comparator (COM1) comparing said x start address with said x display address and generating a signal when said x display address is larger than said x start address, and said second comparator (COM2) comparing said x end address with said x display address and generating a signal when said x display address is smaller than said end address, while said y address limiting means includes a third register (RYS) for setting a y start address, a fourth register (RYE) for setting a y end address, a third comparator (COM3) supplied with said y start address set in said third register (RYS), a fourth comparator (COM4) being supplied with said y end address set in said fourth register (RYE), and said second counter (CY) supplying said y display address to said third and fourth comparators (COM3, COM4), said third comparator (COM3) comparing said y start address with said y display address and generating a signal when said y display address is larger than said y start address, and said fourth comparator (COM4) comparing said y end address with said y display address and generating a signal when said y display address is smaller than said y end address.

4. A special effects generator according to claim 3 wherein said x address limiting means further includes a first AND gate (AND1) coupled to said first and second comparators (COM1, COM2) for generating said x address limiting signal to be supplied to said read address generating means (4), and said y address limiting means further includes a second AND gate (AND2) coupled to said third and fourth comparators (COM3, COM4) for generating said y address limited signal to be supplied to said read address generating means (4).

5. A special effects generator according to claim 1 further comprising gating means (9) coupled to said memory means (7) and said generating means (4) for passing said video signals respectively associated with said special effects through said gating means (9) in response to a key signal formed by said generating means (4) and representing a border of an image in the video signals.

**Patentansprüche**

1. Spezialeffektgenerator für Videosignale, mit:

einer Speichereinrichtung (7) zum Speichern von Videosignalen,
einer Quelle (2) von Daten, die einen Berechnungsbereich (14) für ein Spezialeffekt-Muster darstellen, und
einer Leseadressen-Erzeugungseinrichtung (4), die mit der Speichereinrichtung (7) und mit der Datenquelle (2) verbunden ist, zum Erzeugen einer Leseadresse zum Adressieren der in der Speichereinrichtung (7) gespeicherten Videosignale, die mit dem Spezialeffekt-Muster assoziiert sind,
**gekennzeichnet** durch eine Adressenerzeugungs-Steuereinrichtung, die mit der Datenquelle (21) und mit der Erzeugungseinrichtung (4) verbunden ist, zur Beschränkung der Leseadressen-Erzeugung in Antwort auf die den Berechnungsbereich (14) darstellenden Daten von der Datenquelle (2), wobei die Adressenerzeugungs-Steuereinrichtung einen ersten Zähler (CX), der Synchronisiersignale der Videosignale empfängt und der Adressenerzeugungs-Steuereinrichtung und der Leseadressen-Erzeugungseinrichtung (4) eine x-Anzeigeadresse zuführt, und einen zweiten Zähler umfaßt, der Synchronisiersignale der Videosignale empfängt und der Adressenerzeugungs-Steuereinrichtung und der Leseadressen-Erzeugungseinrichtung (4) eine y-Anzeigeadresse führt.

2. Spezialeffektgenerator gemäß Anspruch 1, wobei die Adressenerzeugungs-Steuereinrichtung die den Berechnungsbereich (14) für das Spezialeffekt-Muster darstellenden Daten von der Datenquelle (2) empfängt, und eine x-Adressenbeschränkungseinrichtung zur Erzeugung eines x-Adressenbeschränkungssignales, das der Leseadressen-Erzeugungseinrichtung (14) eingespeist wird, und eine y-Adressenbeschränkungseinrichtung zur Erzeugung eines y Adressenbeschränkungssignales umfaßt, das der Leseadressen-Erzeugungseinrichtung (4) eingespeist wird.

3. Spezialeffektgenerator gemäß Anspruch 2, wobei die x-Adressenbeschränkungseinrichtung umfaßt

ein erstes Register (RXS) zum Setzen einer x-Startadresse, ein zweites Register (RXE) zum Setzen einer x-Endadresse, einen ersten Komparator (COM1), dem die in dem ersten Register (RXS) gespeicherte x-Startadresse zugeführt wird, einen zweiten Komparator (COM2), dem die in dem zweiten Register (RXE) gesetzte x-Endadresse zugeführt wird, wobei der erste Zähler (CX) die x-Anzeigeadresse dem ersten und dem zweiten Komparator (COM1, COM2) zuführt, wobei der erste Komparator (COM1) die x-Startadresse mit der x-Anzeigeadresse vergleicht und ein Signal erzeugt, wenn die x-Anzeigeadresse größer ist als die x-Startadresse, und wobei der zweite Komparator (COM2) die x-Endadresse mit der x-Anzeigeadresse vergleicht und ein Signal erzeugt, wenn die x-Anzeigeadresse kleiner ist als die Endadresse,

wobei die y-Adressenbeschränkungseinrichtung umfaßt

ein drittes Register (RYS) zum Setzen einer y-Startadresse, ein viertes Register (RYE) zum Setzen einer y-Endadresse, einen dritten Komparator (COM3), dem die in dem dritten Register (RYS) gesetzte y-Startadresse zugeführt wird, einen vierten Komparator (COM4), dem die in dem vierten Register (RYE) gesetzte y-Endadresse zugeführt wird, und wobei der zweite Zähler (CY) die y-Anzeigeadresse dem dritten und dem vierten Komparator (COM3, COM4) zuführt, wobei der dritte Komparator (COM3) die y-Startadresse mit der y-Anzeigeadresse vergleicht und ein Signal erzeugt, wenn die y-Anzeigeadresse größer ist als die y-Startadresse, und wobei der vierte Komparator (COM4) die y-Endadresse mit der y-Anzeigeadresse vergleicht und ein Signal erzeugt, wenn die y-Anzeigeadresse kleiner ist als die y-Endadresse.

4. Spezialeffektgenerator gemäß Anspruch 3, wobei die x-Adressenbeschränkungseinrichtung weiterhin ein erstes UND-Glied (AMD1) umfaßt, das mit dem ersten und dem zweiten Komparator (COM1, COM2) zur Erzeugung des der Leseadressen-Erzeugungseinrichtung (4) zuzuführenden x-Adressenbeschränkungssignales verbunden ist, und wobei die y-Adressenbeschränkungseinrichtung weiterhin ein zweites UND-Glied (AND2) umfaßt, das mit dem dritten und dem vierten Komparator (COM3, COM4) zur Erzeugung des der Leseadressen-Erzeugungseinrichtung (4) zuzuführenden y-Adressenbeschränkungssignales verbunden ist.

5. Spezialeffektgenerator gemäß Anspruch 1, außerdem umfassend eine Gatter-Einrichtung (9), die mit der Speichereinrichtung (7) und der Erzeugungseinrichtung (4) verbunden ist, zum Durchlassen der jeweils mit den Spezialeffekten assoziierten Videosignale durch die Gatter-Einrichtung (9) in Antwort auf ein Schlüsselsignal, das von der Erzeugungseinrichtung (4) gebildet wird und einen Rand eines Bildes in den Videosignalen darstellt.

## Revendications

1. Générateur d'effets spéciaux pour signaux vidéo, le générateur comprenant:

un moyen de mémoire (7) pour mémoriser des signaux vidéo;
une source (2) de données indiquant une région de calcul (14) pour un modèle d'effets spéciaux; et,
un moyen de génération d'adresse de lecture (4) couplé audit moyen de mémoire (7) et à ladite source (2) de données pour engendrer une adresse de lecture pour l'adressage desdits signaux vidéo mémorisés dans ledit moyen de mémoire (7) associés au modèle d'effets spéciaux,
caractérisé par
un moyen de commande de génération d'adresse couplé à ladite source (2) de données et audit moyen de génération (4) pour limiter la génération de ladite adresse de lecture en réponse aux données indiquant la région de calcul (14) provenant de ladite source (2) de données, ledit moyen de commande de génération d'adresse incluant un premier compteur (CX) recevant des signaux de synchronisation desdits signaux vidéo et fournissant une adresse de visualisation x audit moyen de commande de génération d'adresse et audit moyen de génération d'adresse de lecture (4) et un second compteur recevant des signaux de synchronisation desdits signaux vidéo et fournissant une adresse de visualisation y audit moyen de commande de génération d'adresse et audit moyen de génération d'adresse de lecture (4).

2. Générateur d'effets spéciaux selon la revendication 1, dans lequel ledit moyen de commande de génération d'adresse reçoit les données indiquant la région de calcul (14) pour le modèle d'effets spéciaux de ladite source (2) de données, et inclut un moyen de limitation d'adresse x pour produire un signal de limitation d'adresse x envoyé audit moyen de génération d'adresse de lecture (4), et un moyen de limitation d'adresse y pour produire un signal de limitation d'adresse y envoyé audit moyen de génération d'adresse de lecture (4).

3. Générateur d'effets spéciaux selon la revendication 2, dans lequel ledit moyen de limitation d'adresse x comprend un premier registre (RXS) pour établir une adresse de début x, un deuxième registre (RXE) pour établir une adresse de fin x, un premier comparateur (COM1) recevant ladite adresse de début x enregistrée dans ledit premier registre (RXS), un deuxième comparateur (COM2) recevant ladite adresse de fin x établie dans ledit deuxième registre (RXE), ledit premier compteur (CX) fournissant ladite adresse de visualisation x auxdits premier et deuxième comparateurs (COM1,COM2), ledit premier comparateur (COM1) comparant ladite adresse de début x à ladite adresse de visualisation x et engendrant un signal quand ladite adresse de visualisation x est supérieure à ladite adresse de début x, et ledit deuxième comparateur (COM2) comparant ladite adresse de fin x à ladite adresse de visualisation x et engendrant un signal quand ladite adresse de visualisation x est inférieure à ladite adresse de fin, alors que ledit moyen de limitation d'adresse y comprend un troisième registre (RYS) pour établir une adresse de début y, un quatrième registre (RYE) pour établir une adresse de fin y, un troisième comparateur (COM3) recevant ladite adresse de début y établie dans ledit troisième registre (RYS), un quatrième comparateur (COM4) recevant ladite adresse de fin y établie dans ledit quatrième registre (RYE), et ledit second compteur (CY) fournissant ladite adresse de visualisation y auxdits troisième et quatrième comparateurs (COM3,COM4), ledit troisième comparateur (COM3) comparant ladite adresse de début y à ladite adresse de visualisation y et engendrant un signal quand ladite adresse de visualisation y est supérieure à ladite adresse de début y, et ledit quatrième comparateur (COM4) comparant ladite adresse de fin y à ladite adresse de visualisation y et engendrant un signal quand ladite adresse de visualisation y est inférieure à ladite adresse de fin y.

4. Générateur d'effets spéciaux selon la revendication 3, dans lequel ledit moyen de limitation d'adresse x comprend en outre une première porte ET (ET1) couplée auxdits premier et deuxième comparateurs (COM1,COM2) pour engendrer ledit signal de limitation d'adresse x à fournir audit moyen de génération d'adresse de lecture (4), et ledit moyen de limitation d'adresse y comprend en outre une seconde porte ET (ET2) couplée auxdits troisième et quatrième comparateurs (COM3,COM4) pour engendrer ledit signal de limitation d'adresse y à fournir audit moyen de génération d'adresse de lecture (4).

5. Générateur d'effets spéciaux selon la revendication 1, comprenant en outre un moyen de déclenchement (9) couplé audit moyen de mémoire (7) et audit moyen de génération (4) pour faire passer lesdits signaux vidéo respectivement associés auxdits effets spéciaux dans ledit moyen de déclenchement (9) en réponse à un signal de clé formé par ledit moyen de génération (4) et représentant une limite d'une image dans les signaux vidéo.

# FIG. 1

# FIG. 3

# FIG. 4

FIG. 2